# EUROPÄISCHE PATENTANMELDUNG

(11) **EP 1 878 335 A2**
(43) Veröffentlichungstag der Anmeldung: **16.01.2008**
(21) Anmeldenummer: 07006634.5
(22) Anmeldetag: 30.03.2007
(51) Int. Cl.: A01G 23/099

(54) **Werkzeug für die Land-und Forstwirtschaft**

(30) Priorität: 13.07.2006 AT 11902006; 23.01.2007 AT 1162007
(71) Anmelder: Beisteiner, Peter, 2812 Hollenthon (AT)
(72) Erfinder: Beisteiner, Peter, 2812 Hollenthon (AT)
(74) Vertreter: Grabherr, Claudia

(57) **Zusammenfassung**

Die Erfindung betrifft ein Werkzeug für die Land- und Forstwirtschaft in Form eines Fällhebers und Brecheisens umfassend einen Stiel (1) und einen verlängerten Hebeteil (8) mit einer Keilspitze (5) wobei am Stiel (1) oder am verlängerten Hebeteil (6), vorzugsweise im Übergangsbereich zwischen Stiel (1) und verlängertem Hebeteil (6) ein Querbalken (2) angeordnet ist.

## Beschreibung

Die Erfindung betrifft ein Werkzeug für die Land- und Forstwirtschaft in Form eines Fällhebers und/oder Brecheisens umfassend einen Stiel und einen verlängerten Hebeteil mit einer Keilspitze.

Die bisher bekannten gebräuchlichen mechanischen Fällheber können nur zum Fällen von Bäumen und Wenden von Baumstämmen eingesetzt werden, da sie meist nur einen kurzen abgewinkelten Hebeteil aufweisen. Ein Anheben eines liegenden Baumstammes ist meist selbst mit einem verlängerten Hebeteil nur schwer möglich, da das Werkzeug am Auflagepunkt in den weichen Waldboden einsinkt. Des weiteren weisen bekannte Fällheber beim Anhebeln von liegenden Baumstämmen am Boden nur eine sehr geringe Seitenführungsstabilität auf. Weitere Werkzeuge, die zum Bewegen, Wenden und Fällen von Bäumen in der Forstwirtschaft Verwendung finden sind z. B. sogenannte Sappies und Wendehaken. Bei den bisher bekannten Sappies können nur bei liegenden Baumstämmen Zugbewegungen ausgeführt werden. Ein Anhebeln von liegenden Baumstämmen ist ebenfalls nur bedingt möglich, da bei diesen Vorgängen das Schlagteil des Sappies in den weichen Waldboden gedrückt wird und der Sappie auch keine Seitenführungsstabilität aufweist.

Bei den bisher bekannten Brecheisen haben diese für den abgewinkelten ebenfalls sehr kurzen Flachteil nächst der Spitze keinerlei Seitenführung, und nur eine kleine Druckverteilung.

Aufgabe der Erfindung ist es, ein Werkzeug zu schaffen, welches die Funktionen der bekannten Werkzeuge Fällheber, Sappie und Wendehaken sowie Brecheisen verbessert und gleichzeitig in einem einzigen Gerät miteinander vereint, was Zeit und Kosten spart, da anstelle mehrerer Werkzeuge nur mehr ein einziges transportiert und zum Einsatz kommen muss.

Gelöst wird diese Aufgabe dadurch, dass am Stiel oder am verlängerten Hebeteil des Fällhebers oder Brecheisens vorzugsweise im Übergangsbereich zwischen dem Stiel und dem verlängerten Hebeteil ein Querbalken angeordnet ist. Dieser dient als ein zusätzlicher Stabilisierungsfaktor mit verbesserter Seitenführung und verhindert weitestgehend bei Anhebelungen durch die große Auflagefläche das Einsinken in den Boden.

Als ein Merkmal der Erfindung ist am Querbalken an zumindest einem Ende (insbesondere bei Fällheber und Sappie) eine Sappie-Spitze und/oder eine Wendespitze angeordnet. In bevorzugter Weise ist die Sappie-Spitze vom Ende des Querbalkens schräg in einem flachen Winkel zum Querbalken nach oben in Richtung des Stiels ausgerichtet und die Wendespitze am Querbalken in Richtung des verlängerten Hebeteils und im Wesentlichen parallel zu diesem ausgerichtet. Das Gerät kann also neben der Funktion als Fällheber auch wie ein herkömmlicher Sappie zum Ziehen von Baumstämmen verwendet werden. Die Wendespitze dient zum Wenden von Baumstämmen bis zu einem gewissen Durchmesser, wobei diese Spitze durch Anpressen des verlängerten Hebeteils am Baumstamm und Eindrücken der Wendespitze fixiert wird und der Baumstamm durch Druck über den Stiel gewendet werden kann.

Zum Wenden größerer Baumstämme ist es ein weiteres Merkmal der Erfindung, dass ein mittels eines Verbindungsrings am Stiel verstellbarer und abnehmbarer Wendehaken vorgesehen ist. Dieser Wendehaken kann entlang des Stiels je nach Stammdurchmesser angepasst angebracht werden. Durch den auf der gegenüberliegenden Seite des Wendehakens befindlichen langen abgewinkelten Hebeteil mit Keilspitze ergibt sich eine sehr gute Fixierung, welche bei herkömmlichen Fällhebern mit kurzen Hebeteilen nicht möglich ist.

Als eine weitere Möglichkeit für das Anbringen des Wendehakens kann anstatt des Verbindungsringes eine Kette verwendet werden, welche einseitig mit dem Wendehaken fest verbunden ist. Die Kette kann in Gegenrichtung entweder direkt in eine Einhängevorrichtung am Querbalken eingefügt werden, oder durch Umschlingen des Stiels bei einer Einhängevorrichtung des Wendehakens, nächst der fixen Verbindung mit der Kette, bei diesem längenangepasst fixiert werden. Dadurch kann die Länge des Wendehakens um den Baumstamm, diesem größenangepasst, beliebig nach Bedarf verlängert oder verkürzt werden, wodurch sich eine optimale Anpassung an den Stammdurchmesser und damit eine bessere Fixierung ergibt. Um eine optimale Seitenstabilität des Wendehakens zu erreichen, kann dieser zusätzlich im Bereich Übergang zur Kette einen Querbalken aufweisen.

Ein weiteres Merkmal der Erfindung ist es, dass der Stiel als Rohr ausgebildet ist, in dem ein darin verschiebbarer Verlängerungsteil angeordnet ist, wodurch die Hebelwirkung erhöht werden kann. Sofern kein verschiebbarer Verlängerungsteil vorgesehen ist, kann der Stiel massiv ausgebildet sein und aus jedem beliebigen Material, Beispielsweise aus Stahl oder Holz, gefertigt sein.

Als ein weiteres Merkmal der Erfindung kann das Werkzeug an dem, die Sappie-Spitze tragenden Ende des Querbalkens gegenüberliegenden Ende einen Schlagteil aufweisen.

Zur besseren Handhabung kann weiters am Stiel ein abgewinkelter Handgriff vorgesehen sein.

Um die Funktionalität des Werkzeugs weiter zu erhöhen, ist es ein weiteres Merkmal, dass in der Keilspitze des verlängerten Hebeteils eine sich aus der Keilkante in Richtung des verlängerten Hebeteils erstreckende Ausnehmung vorgesehen ist. Damit können beispielsweise große Nägel aus Gegenständen gezogen werden.

Je nach Verwendungszweck kann das Werkzeug ohne Schlagteil oder mit nur einer der beiden Spitzen oder auch nur als reiner Fällheber mit dem stabilisierenden Querbalken gefertigt sein.

Es ist ferner möglich bei einer Ausführung mit einer langen Spitze oder einem Kegelelement am dem Querbalken gegenüberliegenden Ende des Stiels bei Beibehaltung der Funktion des Fällhebers die Funktion des Brecheisens mit Spitze oder einer kegelähnlichen Form, auch in Kombination, als Pflockeisen herzustellen. Der Querbalken nächst der schrägen Keilspitze würde dabei beiderseits als Haltevorrichtung für die Hände eine sehr gute zusätzliche Funktion haben. Im Bedarfsfall kann anstelle der beschriebenen Spitze oder des beschriebenen Kegelelement auch ein Flachteil angefügt sein. Das am Stiel wahlweise angefügte Spitze-Kegel-Flachteilelement kann auch abnehmbar/austauschbar sein.

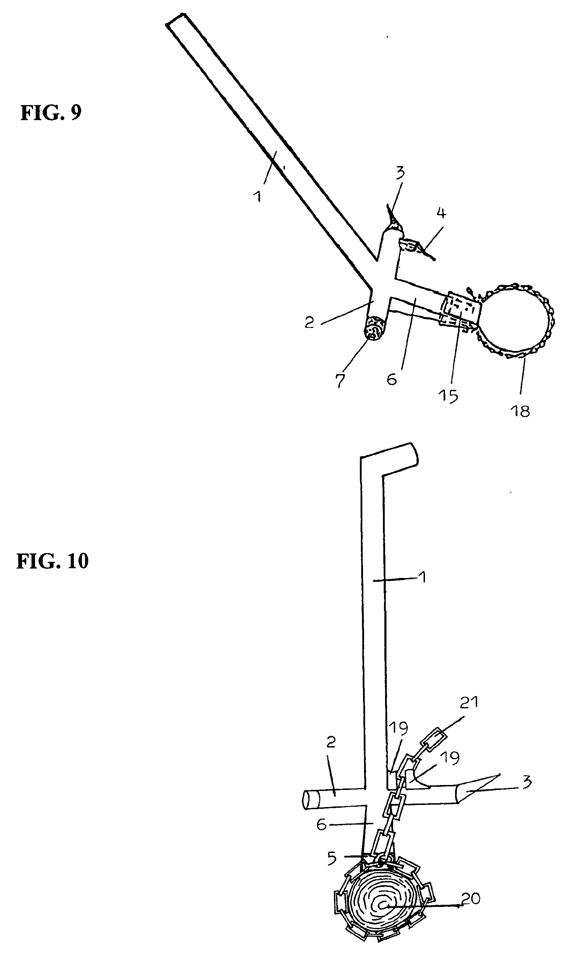

Bei allen Varianten wäre auch die am Querbalken angefügte Einhängevorrichtung, wie bei Fig. 10 Bezugszeichen 19 dargestellt, für das Ausheben von Pfählen wahlweise vorgesehen. Die beiden Enden des Querbalkens und der Übergang zur Keilspitze hätten bei einer Ausführung ohne Sappiespitze Schlagfunktionen.

Zur weiteren Erhöhung der Einsatzmöglichkeit ist es ferner ein Merkmal der Erfindung, dass unterschiedliche Werkzeugendstücke mittels eines Passstücks an der Keilspitze anordbar sind.

Weitere Merkmale und Vorteile der Erfindung sind der Beschreibung, den Ansprüchen sowie den beiliegenden Zeichnungen zu entnehmen.

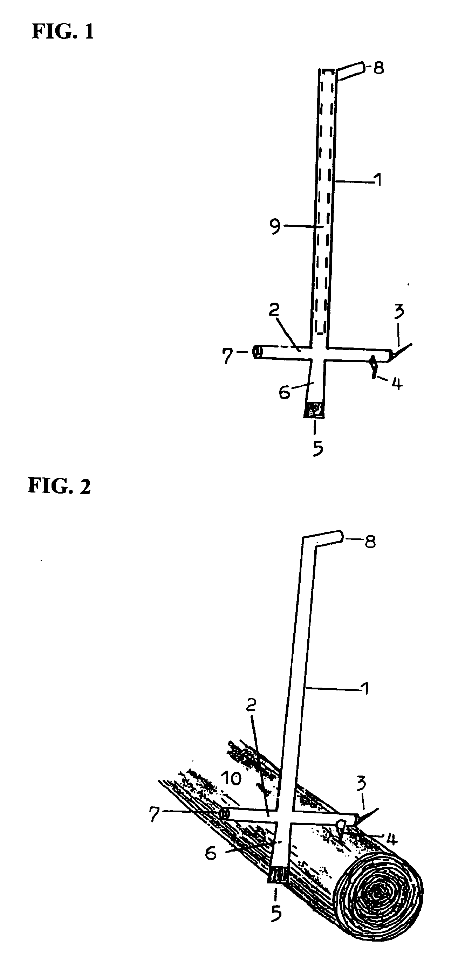

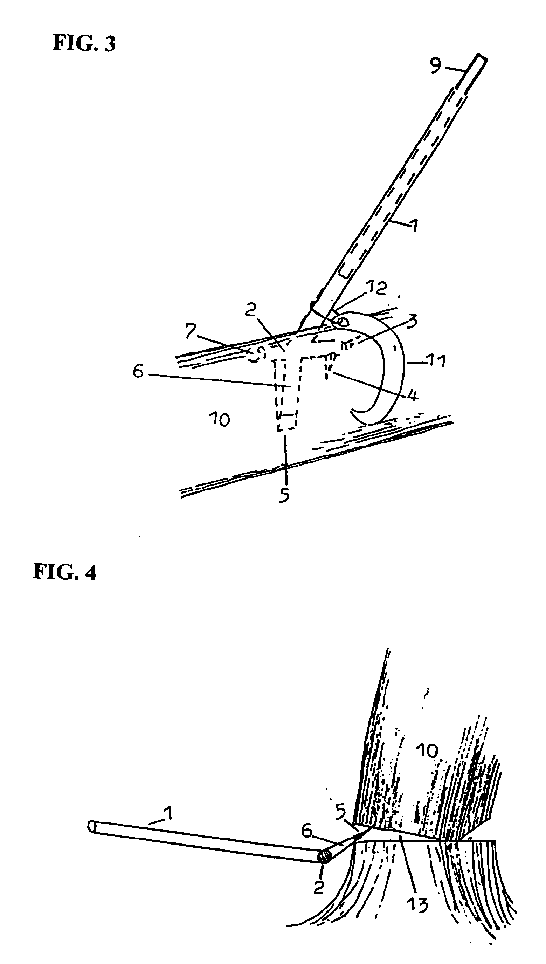

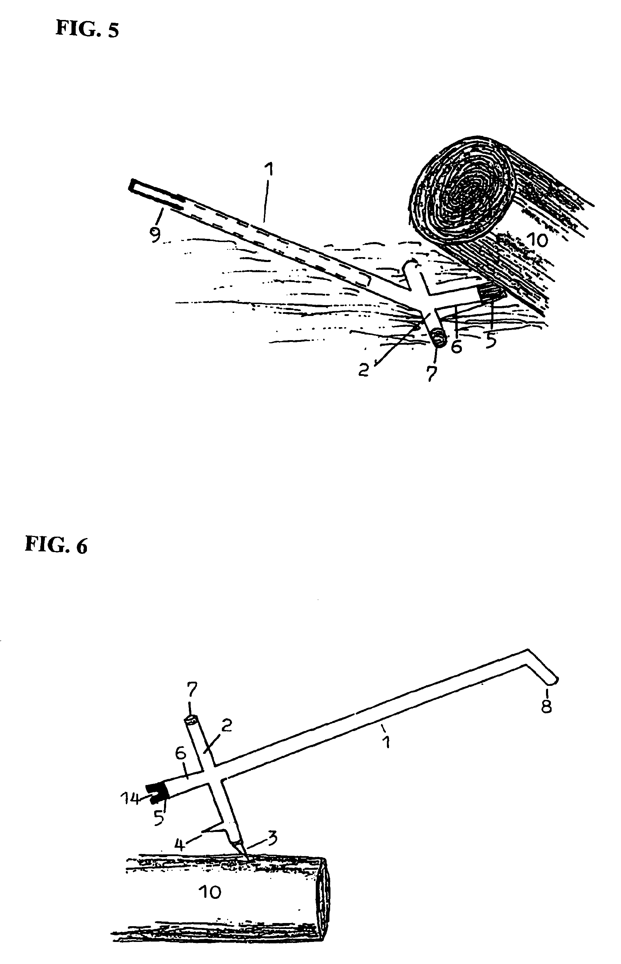

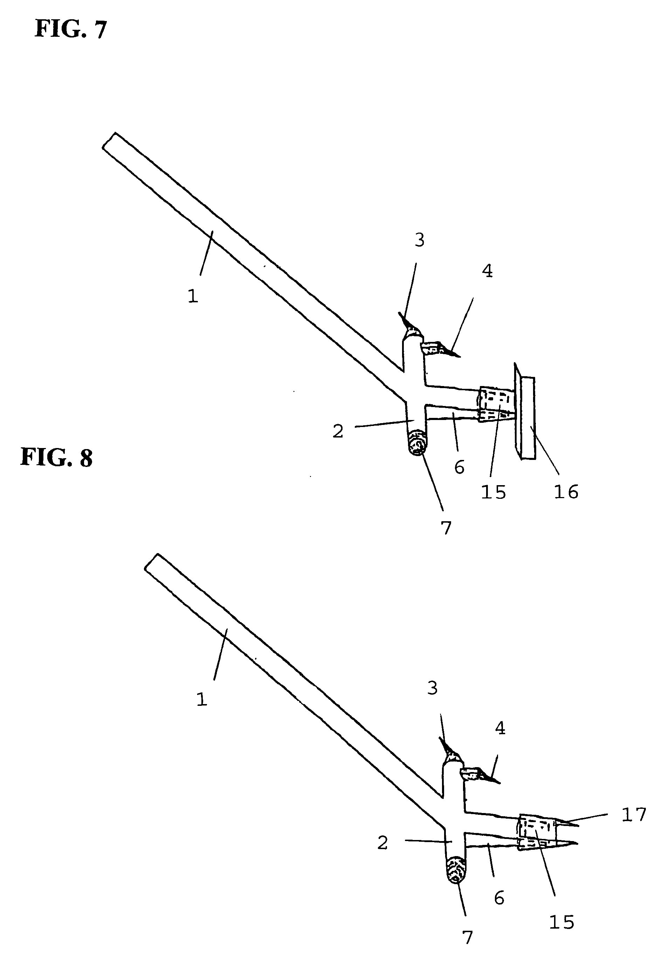

Fig. 1 zeigt den Erfindungsgegenstand in einer Draufsicht. Fig. 2 zeigt das erfindungsgemäße Werkzeug mit dem fixen Wendehaken in einem Baumstamm. Fig. 3 zeigt das erfindungsgemäße Werkzeug mit abnehmbarem Wendehaken am Baumstamm. Fig. 4 ist eine Seitenansicht des Erfindungsgegenstandes mit angehebeltem, zu fällenden Baum im Fällschnitt. Fig. 5 zeigt das Werkzeug mit vom Boden angehebeltem Baumstamm. Fig. 6 stellt die Verwendung des Erfindungsgegenstandes als Sappie dar. Fig. 7 - 9 zeigen eine mögliche Ausführungsform des Erfindungsgegenstandes mit unterschiedlichen Passstücken angeordnet an der Keilspitze am verlängerten Hebeteil. Die Fig. 10 zeigt eine Variante des Erfindungsgegenstandes in einer Draufsicht.

Fig. 1 zeigt eine Draufsicht des Erfindungsgegenstandes mit einem Stiel 1, einem verlängerten Hebeteil 6 mit daran angeordneter Keilspitze 5 sowie den zwischen dem Stiel 1 und verlängertem Hebeteil 6 angeordneten Querbalken 2. An einem Ende des Querbalkens 2 befindet sich ein Schlagteil 7 und am anderen Ende des Querbalkens 2 die Sappie-Spitze 3 sowie die Wendespitze 4. Strichliert eingezeichnet ist das Verlängerungsteil 9 im Stiel 1. Des weiteren besitzt das Werkzeug einen abgewinkelten Handgriff 8.

Die Fig. 2 zeigt den Erfindungsgegenstand angeordnet an einem liegenden Baumstamm 10 an dem der verlängerte Hebeteil 6 angepresst ist und die Wendespitze 4 in den Baumstamm getrieben wird. Durch Anhebeln des Stieles 1 kann somit ein Baumstamm 10 bis zu einem gewissen Durchmesser gewendet werden.

Fig. 3 zeigt den Erfindungsgegenstand angeordnet an einem Baumstamm 10 mit dickerem Stammdurchmesser. Die nicht sichtbaren Teile sind strichliert gezeichnet. Zum Wenden des Baumstammes ist ein mittels eines Verbindungsrings 12 am Stiel verstellbar angeordneter Wendehaken 11 gezeigt. Durch den verlängerten Hebeteil 6 sowie den Wendehaken 11 können auch Baumstämme 10 mit dickerem Durchmesser sicher fixiert und durch Anhebeln am Stiel 1 gewendet werden.

Fig. 4 zeigt die Verwendung des Werkzeuges als Fällheber beim Fällen eines Baumes 10 mit eingezeichnetem Fällschnitt 13.

In der Fig. 5 ist die Verwendung des erfindungsgemäßen Werkzeuges zum Anhebeln eines liegenden Baumstammes 10 gezeigt, wobei in vorteilhafter Weise durch die breitere Auflagefläche des Querbalkens 2 das Werkzeug nicht in den Boden 1 sinkt, sowie eine bessere Seitenführungsstabilität aufweist.

Fig. 6 zeigt schließlich die Verwendung des erfindungsgemäßen Werkzeuges als Sappie zum Ziehen eines Baumstammes 10 mittels der Sappie-Spitze 3. Ferner eingezeichnet ist eine alternative Ausführungsform der Keilspitze 5 mit einer Ausnehmung 14, welche beispielsweise zum Herausziehen von Nägeln aus Gegenständen verwendet werden kann.

Fig. 7 - 9 zeigen eine Ausführungsform der Erfindung, bei der zur weiteren Erhöhung der Einsatzmöglichkeiten ein an die Keilspitze 5 entsprechendes Passstück 15 aufgesteckt ist, welches unterschiedlich ausgestaltete Enden aufweist. Als Beispiel ist in Fig. 7 ein Passstück 15 mit breiter Auflage 16, in Fig. 8 ein Passstück 15 mit Spitzen 17 oder in Fig. 9 ein Passstück 15 mit einer Kette 18 gezeigt. Die Kette 18 kann beispielsweise zum An- bzw. Ausheben von Gegenständen verwendet werden, wenn die Keilspitze 5 nicht unter dem Gegenstand platziert werden kann. Je nach Bedarf können auch weitere Werkzeugenden mittels des Passstücks 15 mit der Keilspitze 5 verbunden werden.

Bei der in Fig.10 gezeigten Variante ist am Querbalken 2 eine Einhängevorrichtung 19 für eine Kette vorgesehen. Durch diese Vorrichtung kann bei der Aushebung eines Pfahles 20 über eine Kette 21, welche über der Keilspitze 5 durch einen Kettenring oder Schlinghaken zusammengezogen und über die Einhängvorrichtung 19 fixiert wird, der Pfahl 20 danach durch Anhebelung ausgehoben werden.

Diese Einhängevorrichtung kann wahlweise auch am Keil oder Stiel, nächst dem Querbalken angeordnet sein.

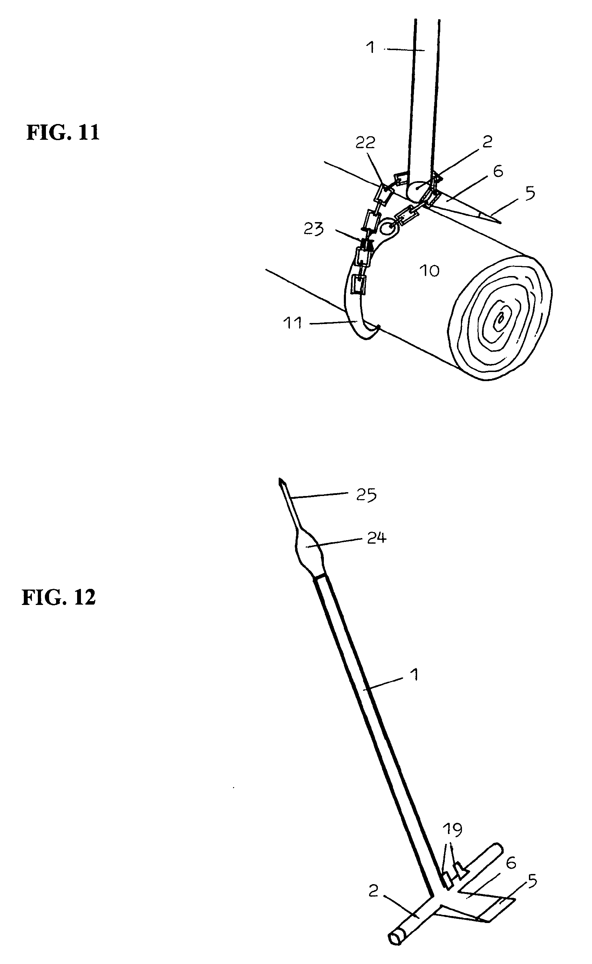

Figur 11 zeigt den Wendehaken 11 mit einseitig fest verbundener Kette 22 und eine Einhängevorrichtung 23 am Wendehaken 11, wobei die Kette 22 im Übergangsbereich des Stiels 1 zum Querbalken 2 des Fällhebers diesen umschlingt. Die Kette kann längenangepasst variabel in die Einhängevorrichtung 23 eingehängt werden. Es ist auch möglich ohne Umschlingen des Stiels die Kette längenangepasst in die Einhängevorrichtung 19 zu platzieren (Fig. 10).

Fig. 12 zeigt am Stielende eine lange Spitze 25 mit einem kegelförmigen Übergang 24 wodurch sich die Brechstangen und Pfahleisenfunktion ergibt. Es ist auch möglich eine Ausführung wo nur die Funktion Brechstange 25 oder Pfahleisen 24 vorgesehen ist. Diese Teile können auch abnehmbar und auswechselbar angefügt sein.

## Patentansprüche

1. Werkzeug für die Land- und Forstwirtschaft in Form eines Fällhebers und/oder Brecheisens umfassend einen Stiel und einen verlängerten Hebeteil mit einer Keilspitze, **dadurch gekennzeichnet, dass** am Stiel (1) oder am verlängerten Hebeteil (6), vorzugsweise im Übergangsbereich zwischen Stiel (1) und verlängertem Hebeteil (6) ein Querbalken (2) angeordnet ist.

2. Werkzeug für die Land- und Forstwirtschaft nach Anspruch 1, **dadurch gekennzeichnet, dass** am Querbalken (2) an zumindest einem Ende eine Sappie-Spitze (3) und/oder eine Wendespitze (4) angeordnet ist.

3. Werkzeug für die Land- und Forstwirtschaft nach Anspruch 2, **dadurch gekennzeichnet, dass** die Sappie-Spitze (3) vom Ende des Querbalkens (2) schräg in einem flachen Winkel zum Querbalken (2) nach oben in Richtung des Stiels (1) ausgerichtet ist.

4. Werkzeug für die Land- und Forstwirtschaft nach Anspruch 2 oder 3, **dadurch gekennzeichnet, dass** die Wendespitze (4) am Querbalken (2) in Richtung des verlängerten Hebeteils (6) und im Wesentlichen parallel zu diesem ausgerichtet ist.

5. Werkzeug für die Land- und Forstwirtschaft nach einem der Ansprüche 2 bis 4, **dadurch gekennzeichnet, dass** an dem die Sappiespitze (3) tragenden Ende des Querbalkens (2) gegenüberliegenden Ende ein Schlagteil (7) vorgesehen ist.

6. Werkzeug für die Land- und Forstwirtschaft nach einem der Ansprüche 1 bis 5, **dadurch gekennzeichnet, dass** am Querbalken (2) an der Keilspitze (5) oder am Stiel (1) nahe des Querbalkens (2) eine Einhängevorrichtung (19) für eine Kette angeordnet ist.

7. Werkzeug für die Land- und Forstwirtschaft nach einem der Ansprüche 1 bis 6, **dadurch gekennzeichnet, dass** ein mittels eines Verbindungsrings (12) am Stiel (1) verstellbarer und abnehmbarer Wendehaken (11) vorgesehen ist.

8. Werkzeug für die Land- und Forstwirtschaft nach einem der Ansprüche 1 bis 6, **dadurch gekennzeichnet, dass** ein an einer Seite einer Kette (22) angeordneter Wendehaken (11) vorgesehen ist, wobei die andere Seite der Kette (22) wahlweise längenangepasst und längenverstellbar in eine Einhängevorrichtung (19) am Querbalken (2) einhängbar ist oder den Stiel (1) umschlingend am Wendehaken (11) über einen Enhängeschlitz (23) längenverstellbar befestigbar ist.

9. Werkzeug für die Land- und Forstwirtschaft nach einem der Ansprüche 1 bis 8, **dadurch gekennzeichnet, dass** der Stiel (1) als Rohr ausgebildet ist, in dem ein darin verschiebbarer Verlängerungsteil (9) angeordnet ist.

10. Werkzeug für die Land- und Forstwirtschaft nach einem der Ansprüche 1 bis 9, **dadurch gekennzeichnet, dass** am Stiel (1) ein abgewinkelter Handgriff (8) angeordnet ist.

11. Werkzeug für die Land- und Forstwirtschaft nach einem der Ansprüche 1 bis 10, **dadurch gekennzeichnet, dass** in der Keilspitze (5) des verlängerten Hebeteils (6) eine sich aus der Keilkante in Richtung des verlängerten Hebteils (6) erstreckende Ausnehmung (14) vorgesehen ist.

12. Werkzeug für die Land- und Forstwirtschaft nach einem der Ansprüche 1 bis 11, **dadurch gekennzeichnet, dass** unterschiedliche Werkzeugendstücke (16,17,18) mittels eines Passstücks (15) an der Keilspitze (5) anordbar sind.

13. Werkzeug für die Land- und Forstwirtschaft nach einem der Ansprüche 1 bis 12, **dadurch gekennzeichnet, dass** am dem Hebelteil (6) abgewandten Ende des Stiels (1) eine Spitze (25) und/oder ein Kegelelement (24) und/oder ein Flachteil, insbesondere für Spitzzwängarbeiten und/oder Herstellung von Pfahllöchern vorgesehen ist.

14. Werkzeug für die Land- und Forstwirtschaft nach Anspruch 13, **dadurch gekennzeichnet, dass** die Spitze (25) und/oder das Kegelelement (24) und/oder der Flachteil vom Stiel (1) abnehmbar ausgebildet sind.
